# DEMANDE DE BREVET EUROPEEN

(11) **EP 1 216 913 A1**
(43) Date de publication de la demande: **26.06.2002**
(21) Numéro de dépôt: 01403304.7
(22) Date de dépôt: 19.12.2001
(51) Int. Cl.: B62D 25/08, B60K 11/04

(54) **Face avant technique de véhicule automobile en trois parties comprenant un module de refroidissement**

(30) Priorité: 19.12.2000 FR 0016600
(71) Demandeur: COMPAGNIE PLASTIC OMNIUM, 69007 Lyon (FR)
(72) Inventeur: Decker, Laurent, 69100 Villeurbanne (FR); Cheron, Hugues, 01800 Bourg Saint Christophe (FR)
(74) Mandataire: Remy, Vincent Noel Paul

(57) **Abrégé**

L'invention concerne une face avant technique d'un véhicule automobile avec module de refroidissement (6) muni d'un châssis rigide.

Cette face avant technique comprend deux pièces d'extrémités (7) servant de support à au moins un organe fonctionnel du véhicule, ces deux pièces d'extrémités étant conformées de manière à prolonger le module de refroidissement (6) sur toute la façade du véhicule, en occupant chacune un coin du véhicule.

## Description

La présente invention concerne une face avant technique de véhicule automobile en trois parties comprenant un module de refroidissement.

On sait que les faces avant techniques, qui se trouvent à l'avant des compartiments moteurs des véhicules, supportent tout ou partie du système de refroidissement du moteur, lequel est constitué par un radiateur, un groupe moto-ventilateur et éventuellement par un condenseur et une buse pour le groupe moto-ventilateur.

Dans la suite de la présente description, les composants du système de refroidissement seront désignés globalement par les termes "module de refroidissement".

Une des difficultés avec les faces avant techniques connues est qu'elles n'offrent qu'un accès illimité au module de refroidissement lorsqu'elles sont montées sur le véhicule. De plus, pour démonter le module de refroidissement, il faut démonter intégralement la face avant technique, ce qui entraîne un coût de main-d'oeuvre élevé.

Plus précisément, avec les faces avant techniques connues, la difficulté de démontage réside dans l'emplacement des fixations du module de refroidissement par rapport au bloc moteur. Lorsque ces fixations sont complètement séparées du bloc moteur, ce qui est le cas avec des faces avant techniques monoblocs, le montage de la face avant technique en usine sur le véhicule est facilité mais l'extraction du seul module de refroidissement n'est pas possible. À l'inverse, lorsque le module de refroidissement est supporté par le bloc moteur, son extraction de la face avant technique est aisée mais c'est alors son montage sur le véhicule en usine qui devient plus coûteux.

Par ailleurs, chaque modèle de véhicule possède son propre modèle de face avant technique, alors que les composants du module de refroidissement peuvent être des produits standards.

Enfin, un autre inconvénient des faces avant techniques est que leur fonction de support de nombreux organes du véhicule exige qu'elles présentent une grande rigidité, ce qui grève leur prix de revient et limite leurs possibilités de conception, notamment leur obtention en plusieurs parties, qui est pourtant un facteur d'économie, tant à la fabrication qu'au montage.

La présente invention propose une nouvelle face avant technique qui rend aisé l'accès au module de refroidissement et son démontage, permet la standardisation de la face avant technique, et offre de nouvelles possibilités économiquement avantageuses de réalisation de ladite face avant technique.

La présente invention a pour objet une face avant technique d'un véhicule automobile pré équipée d'un module de refroidissement, caractérisée en ce qu'elle comprend, en combinaison :
- un châssis rigide d'un module de refroidissement,
- deux pièces d'extrémités servant de support à au moins un organe fonctionnel du véhicule, ces deux pièces d'extrémités étant réunies au châssis rigide du module de refroidissement par des liaisons rigides et étant conformées de manière à prolonger le module de refroidissement sur toute la façade du véhicule, en occupant chacune un coin du véhicule, chaque pièce d'extrémité comportant des moyens de fixation à la structure du véhicule.

Le module de refroidissement comporte généralement un élément porteur servant de châssis rigide, qui peut être le radiateur ou la buse, laquelle est aussi désignée "cassette" lorsqu'elle inclut une poutre constituant la traverse haute de la face avant technique.

En prévoyant des liaisons rigides entre le châssis du module de refroidissement et les pièces d'extrémités, la face avant technique selon l'invention tient pour réglé le problème de la transmission à la face avant des vibrations provenant du radiateur. Ces vibrations avaient pour origine des turbulences d'écoulement et des coups de béliers qui, bien qu'ayant pratiquement disparu des circuits de refroidissement modernes, sont toujours considérés par l'homme du métier comme devant être pris en compte, en raison d'une habitude acquise.

Dans un mode de réalisation particulier, la face avant technique comporte en outre une traverse reliant les pièces d'extrémités, de préférence une traverse haute, afin par exemple de pouvoir servir à la fixation d'une serrure de capot moteur.

De façon simplifiée, l'obtention d'une face avant technique selon l'invention se résume à l'ajout de deux pièces d'extrémités de part et d'autre du module de refroidissement et éventuellement d'une traverse reliant ces deux pièces d'extrémités.

On comprend dès lors, que l'accès au module de refroidissement et son démontage sont grandement facilités.

De plus, étant donné que les parties de la face avant technique qui sont intimement liées à l'esthétique du véhicule sont ses extrémités situées dans les coins du véhicule, l'invention est avantageuse en ce que l'adaptation de la face avant technique à un autre modèle de véhicule peut se faire très facilement en remplaçant uniquement les pièces d'extrémités. En d'autres termes, la standardisation de la face avant technique ne pose aucune difficulté au sens où les mêmes éléments techniques peuvent très facilement être utilisés sur des véhicules ayant des caractéristiques techniques identiques mais des caractéristiques esthétiques différentes, comme par exemple des véhicules de marques différentes partageant une même plate-forme.

Un autre avantage remarquable de l'invention est que la face avant technique tire sa rigidité du module de refroidissement. En effet, au lieu de présenter elle-même une grande rigidité en tant que pièce distincte du module de refroidissement et de supporter ce dernier comme un organe fonctionnel source de sollicitations mécaniques, la face avant technique selon l'invention tire profit de la présence du module de refroidissement et l'intègre dans ses éléments constitutifs, par ajout de pièces d'extrémités apportant uniquement un complément de rigidité dans les parties de la face avant non occupées par le module de refroidissement.

Par ailleurs, la composition de la face avant technique en trois parties assemblées présente de nombreux avantages.

Tout d'abord, la fabrication de deux pièces d'extrémités par moulage de matière plastique est d'autant plus facile et économique que les pièces en question sont petites. Il est en effet intéressant de mouler deux pièces d'extrémités de taille réduite plutôt qu'une face avant technique d'un seul tenant.

Ensuite, aucune pièce de la face avant technique selon l'invention ne s'étendant sur toute la largeur du véhicule, le dimensionnement géométrique de la face avant technique peut être adapté à la largeur précise du véhicule en jouant sur les fixations du châssis rigide sur les pièces d'extrémités.

De plus, on peut, conformément à l'invention, utiliser un matériau adapté pour chaque partie de la face avant technique, sans rencontrer de difficulté de surmoulage ou co-moulage de plusieurs matières différentes. En particulier, il est avantageux d'utiliser un matériau structurel, généralement assez coûteux, en matière plastique, en tôle ou en matériau hybride pour la traverse, afin de lui conférer de bonnes propriétés mécaniques, notamment pour lui permettre de supporter le claquage capot, et un matériau plus économique comme le polypropylène pour les pièces d'extrémités.

Dans un mode de réalisation particulier, le châssis rigide du module de refroidissement est assujetti aux pièces d'extrémités par des moyens assurant son positionnement longitudinal et vertical sur le véhicule.

Conformément à l'invention, le module de refroidissement peut être positionné en X et en Z (c'est-à-dire horizontalement suivant l'axe longitudinal du véhicule et verticalement) dans sa partie supérieure et référencé en X dans sa partie inférieure.

Le module de refroidissement peut aussi être référencé en X en partie supérieure et référencé en X et en Z en partie inférieure.

Les positionnements en X et en Z peuvent se faire uniquement sur les pièces d'extrémités.

Toutefois, une autre possibilité est d'assurer le positionnement en partie supérieure sur une traverse haute dont les extrémités sont fixées aux pièces d'extrémités.

De même, si la face avant technique comporte une poutre basse, laquelle peut faire partie du module de refroidissement, le positionnement en partie inférieure peut-être effectué par cette poutre basse.

La présente invention a en particulier pour objet une face avant technique telle que décrite ci-dessus dans laquelle le châssis rigide du module de refroidissement est une buse.

L'invention a également pour objet un ensemble de deux pièces d'extrémités destinées à compléter le châssis rigide d'un module de refroidissement pour constituer une face avant technique telle que décrite ci-dessus.

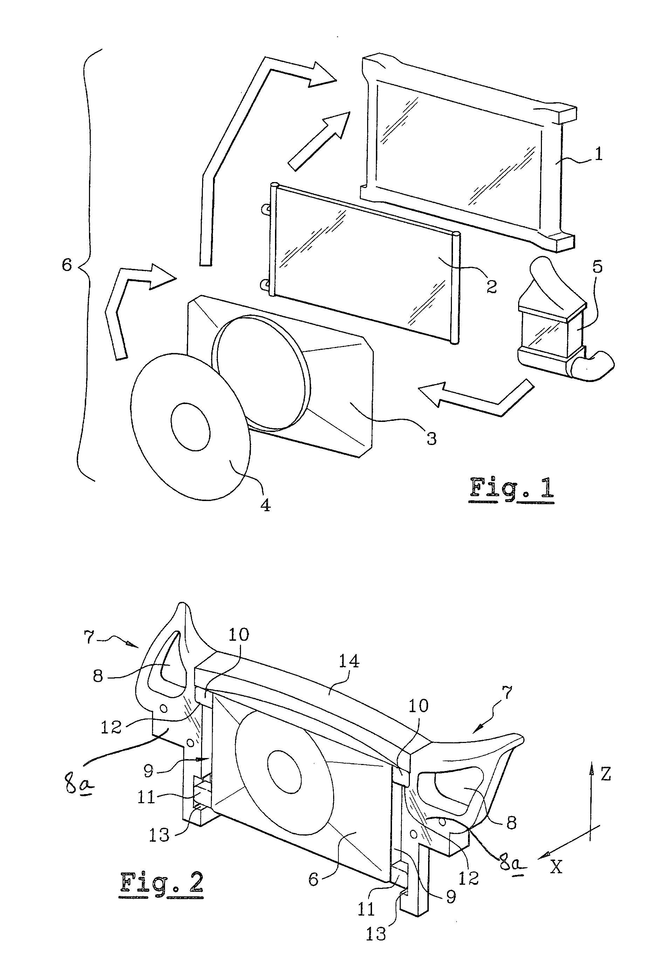

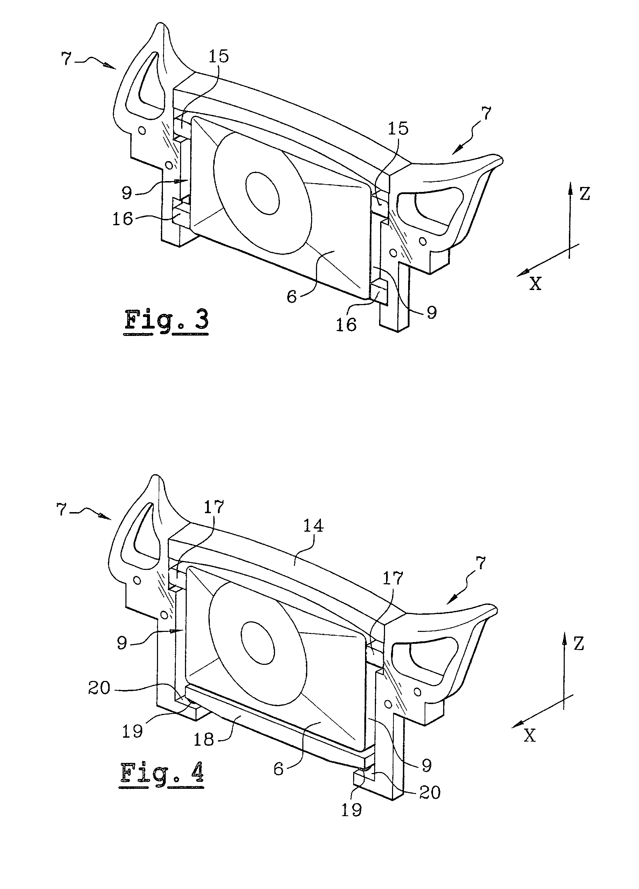

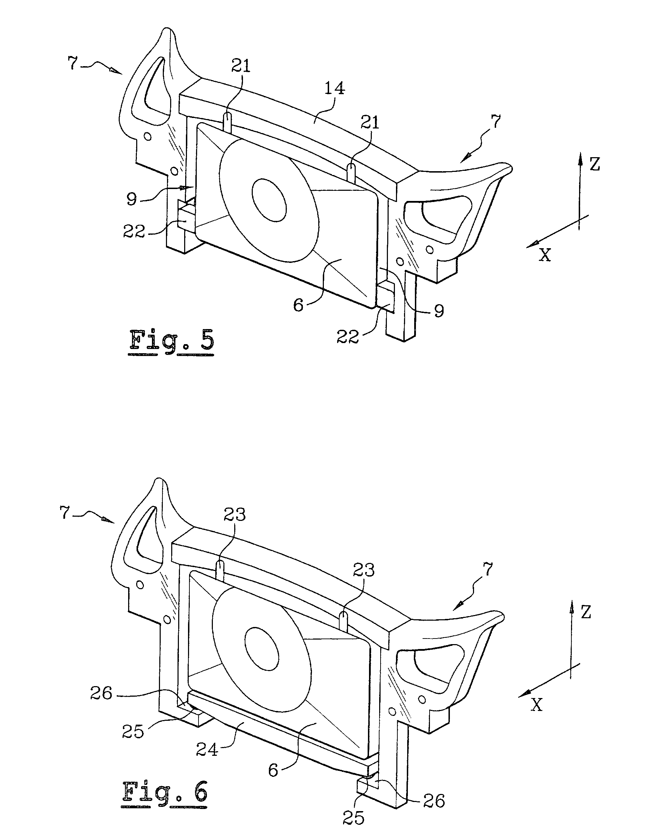

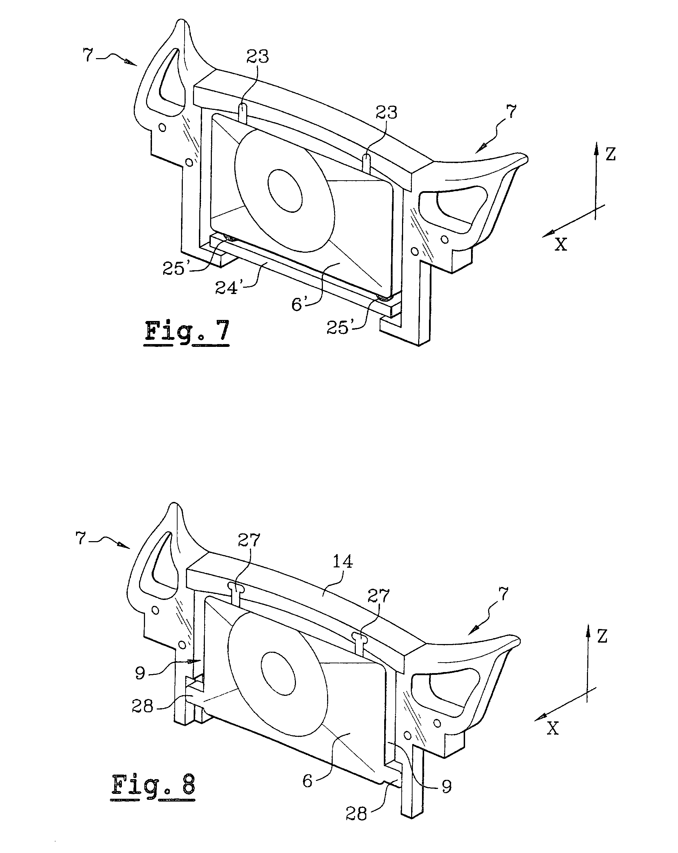

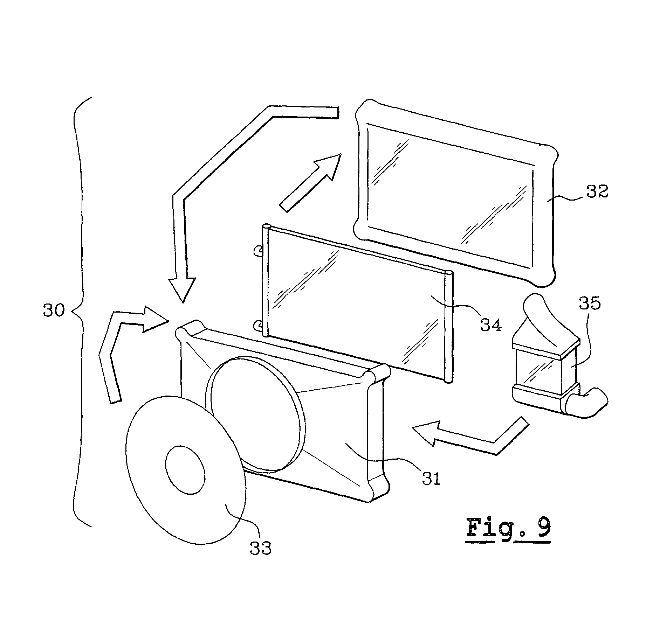

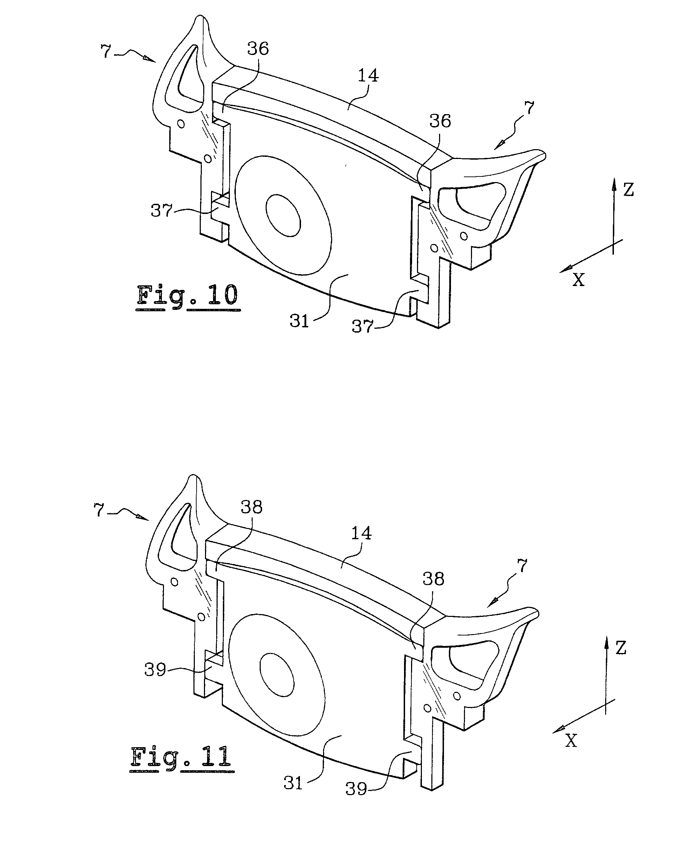

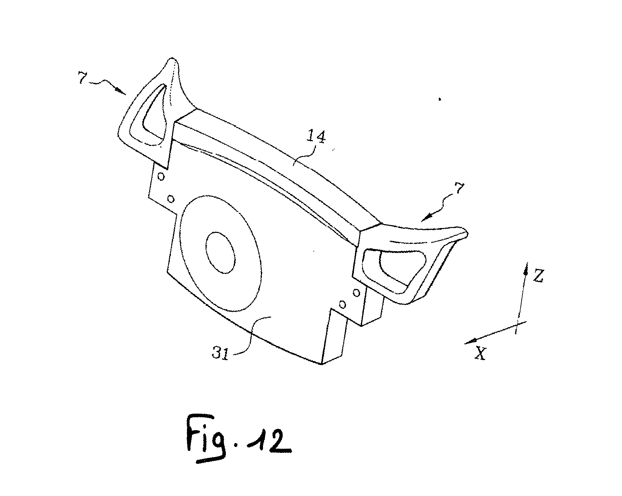

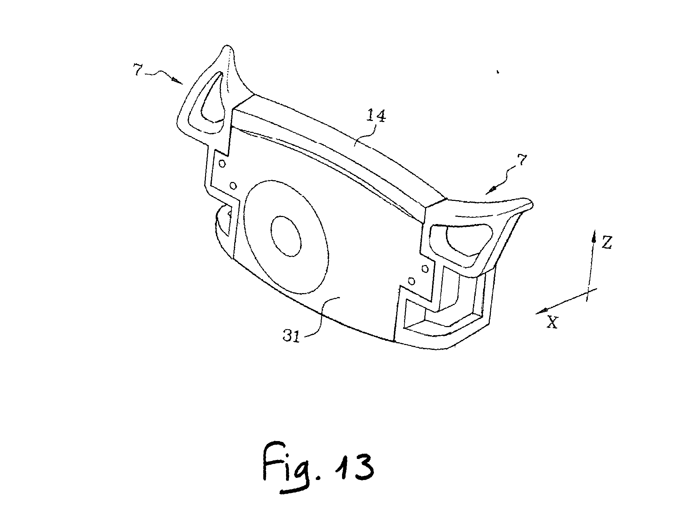

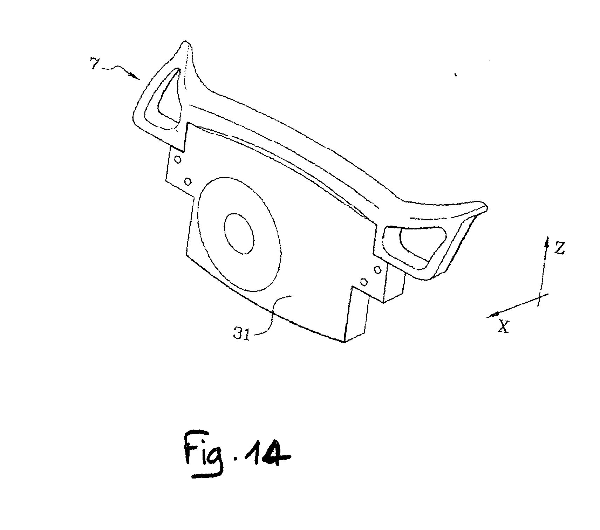

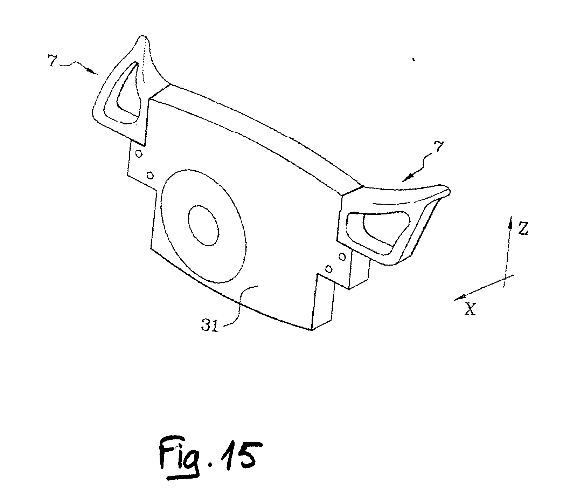

Afin de faciliter la compréhension de l'invention, des exemples de réalisation vont maintenant être décrits à l'aide des dessins annexés, qui comprennent :
- une figure 1 qui est un éclaté en perspective d'un module de refroidissement dont l'élément porteur est un radiateur,
- une figure 2 qui est une vue en perspective d'une face avant technique selon un premier mode de réalisation de l'invention, incluant le module de refroidissement de la figure 1,
- une figure 3 qui est analogue à la figure 2 et représente une face avant technique selon un autre mode de réalisation de l'invention,
- une figure 4 qui est analogue à la figure 2 et représente une face avant technique selon un autre mode de réalisation de l'invention,
- une figure 5 qui est analogue à la figure 2 et représente une face avant technique selon un autre mode de réalisation de l'invention,
- une figure 6 qui est analogue à la figure 2 et représente une face avant technique selon un autre mode de réalisation de l'invention,
- une figure 7 qui représente une variante du mode de réalisation de la figure 6,
- une figure 8 qui est analogue à la figure 2 et représente une face avant technique selon un autre mode de réalisation de l'invention,
- une figure 9 qui est un éclaté en perspective d'un module de refroidissement dont l'élément porteur est une buse,
- une figure 10 qui est une vue en perspective d'une face avant technique selon un autre mode de réalisation de l'invention, incluant le module de refroidissement de la figure 9,
- une figure 11 qui est analogue à la figure 10 et représente une face avant technique selon un autre mode de réalisation de l'invention,
- des figures 12, 13, 14 et 15 qui sont des vues analogues aux précédentes illustrant d'autres variantes de réalisation de la face avant technique selon l'invention.

Sur la figure 1, on a représenté les composants d'un module de refroidissement : un radiateur 1, un condensateur 2, une buse 3, un groupe moto-ventilateur 4. Des accessoires, tels qu'un radiateur auxiliaire de suralimentation (intercooler) 5, viennent s'ajouter au module assemblé.

Les flèches sur la figure 1 indiquent l'ordre de liaison des pièces les unes par rapport aux autres.

Ainsi, le groupe moto-ventilateur 4 est monté sur la buse 3, laquelle est montée sur le radiateur 1. Le condensateur 2 est également monté sur le radiateur 1. Les accessoires 5 sont montés sur l'ensemble assemblé.

Le module de refroidissement 6 obtenu par ce montage peut être utilisé pour former une face avant technique telle que celle représentée à la figure 2, qui est constituée par le module 6 et deux pièces d'extrémités 7.

Chaque pièce d'extrémité 7 borde latéralement le module 6 et occupe un coin du véhicule. Elle comporte un logement 8 pour un bloc optique et divers supports pour d'autres organes fonctionnels du véhicule.

Sous ce logement 8, une platine de fixation 8a permet de monter la pièce d'extrémité, donc toute la face avant technique, sur l'extrémité d'un longeron (non représenté).

Le module comporte quatre plots rigides en saillie de ses deux petites faces latérales 9, au voisinage de ses bords supérieur et inférieur.

Les deux plots supérieurs 10 assurent le positionnement du module par rapport aux pièces d'extrémités 7 dans les directions X et Z. Les deux plots inférieurs 11 assurent le positionnement en X.

A cet effet, chaque pièce d'extrémité comporte un réceptacle supérieur 12 et un réceptacle inférieur 13, sous la forme d'encoches débouchant vers le module.

La fixation de chaque plot dans son réceptacle peut s'effectuer par tout moyen assurant la rigidité de la liaison.

Une traverse haute 14 est fixée par ses deux extrémités aux deux pièces d'extrémités 7. On voit que la face avant technique utilise le module de refroidissement comme élément structurel central, monté sur la structure du véhicule, par l'intermédiaire des pièces d'extrémités.

Suivant les dimensions du module de refroidissement, la largeur des pièces d'extrémités est adaptée de manière à couvrir tout l'avant du véhicule.

Sur la figure 3, le module de refroidissement 6 comporte aussi quatre plots rigides en saillie de ses petites faces latérales 9.

Dans ce mode de réalisation, les deux plots supérieurs 15 assurent le positionnement en X, tandis que les deux plots inférieurs 16 assurent le positionnement en X et en Z.

Une traverse haute 14 relie les deux pièces d'extrémités.

Dans le mode de réalisation de la figure 4, le module de refroidissement 6 ne comporte que deux plots rigides 17 en partie supérieure. En partie inférieure, le module de refroidissement 6 inclut une poutre basse 18 dont les deux extrémités biseautées comportent des plots 19.

Ces plots inférieurs 19 reposent sur des réceptacles 20 solidaires des pièces d'extrémités et assurent le positionnement du module de refroidissement par rapport aux pièces d'extrémités suivant les directions X et Z. Les plots supérieurs 17 assurent le positionnement en X par rapport aux pièces d'extrémités. Une traverse haute 14 renforce la rigidité de l'ensemble.

Dans le mode de réalisation de la figure 5, le module de refroidissement 6 comporte deux plots supérieurs 21 en saillie de son bord supérieur et deux plots inférieurs 22 en saillie de ses deux petites faces latérales 9.

Les deux plots supérieurs 21 assurent le positionnement en X par rapport à la traverse haute 14. Les deux plots inférieurs 22 assurent le positionnement en X et en Z par rapport aux pièces d'extrémités.

Dans le mode de réalisation de la figure 6, le module de refroidissement 6 comporte deux plots supérieurs 23 en saillie de son bord supérieur assurant son positionnement en X par rapport à la traverse haute. En partie inférieure, le module de refroidissement inclut une poutre basse 24 dont les extrémités biseautées présentent des plots 25 qui, en s'appuyant sur des réceptacles 26 solidaires des pièces d'extrémités 7, assurent le positionnement en X et en Z.

La figure 7 représente une variante du mode de réalisation de la figure 6, dans laquelle la poutre basse 24' est assujettie par ses extrémités aux pièces d'extrémités 7.

Le module de refroidissement 6' est alors en appui en partie basse sur la traverse 24' par des plots 25' qui assurent son positionnement en X.

Dans le mode de réalisation de la figure 8, deux plots supérieurs 27 font saillie du bord supérieur du module 6 et assurent son positionnement en X et en Z par rapport à une traverse haute 14, tandis que deux plots inférieurs 28 en saillie des petites faces latérales 9 du module 6 assurent le positionnement en X par rapport aux pièces d'extrémités 7.

A la figure 9, on a représenté les parties constitutives d'un module de refroidissement 30 dont l'élément porteur est la buse 31 et non plus le radiateur 32. Comme à la figure 1, les flèches représentent les liaisons entre pièces.

Le groupe moto-ventilateur 33 est monté sur la buse 31. Le condenseur 34 est monté sur le radiateur 32, lequel est monté sur la buse 31.

Les accessoires 35 se montent sur le module assemblé.

Dans le mode de réalisation de la figure 10, le module de refroidissement 31 obtenu selon l'assemblage de la figure 9 comporte des plots rigides en saillie de ses petites faces latérales, au voisinage de ses bords supérieur et inférieur. Les deux plots supérieurs 36 assurent le positionnement en X par rapport aux pièces d'extrémités 7 et les deux plots inférieurs 37 assurent les positionnements en X et en Z.

Dans le mode de réalisation de la figure 11, les positionnements en X et en Z sont assurés par les deux plots supérieurs 38 tandis que les plots inférieurs 39 n'assurent que le positionnement en X.

Dans les modes de réalisation des figures 10 et 11, une traverse haute 14 relie les deux pièces d'extrémités.

Dans les variantes des figures 12 à 15, le module de refroidissement est légèrement différent. Son châssis rigide est constitué par une buse 31 qui intègre les platines de fixation aux longerons du véhicule.

Les modes de réalisation décrits ci-dessus ne sont fournis qu'à titre d'exemples et ne sauraient être interprétés comme constituant des limitations à la portée de l'invention, laquelle est définie par les revendications annexées.

## Revendications

1. Face avant technique d'un véhicule automobile pré équipée d'un module de refroidissement, **caractérisée en ce qu'**elle comprend, en combinaison :
- un châssis rigide (1, 31) d'un module de refroidissement,
- deux pièces d'extrémités (7) servant de support à au moins un organe fonctionnel du véhicule, ces deux pièces d'extrémités étant réunies au châssis rigide du module de refroidissement par des liaisons rigides et étant conformées de manière à prolonger le module de refroidissement (6,31) sur toute la façade du véhicule, en occupant chacune un coin du véhicule, chaque pièce d'extrémité comportant des moyens de fixation à la structure du véhicule.

2. Face avant technique selon la revendication 1, **caractérisée en ce que** le châssis rigide du module de refroidissement est un radiateur ou une buse.

3. Face avant technique selon l'une quelconque des revendications 1 et 2, **caractérisée en ce qu'**elle comporte une traverse (14), de préférence une traverse haute (14), reliant les pièces d'extrémités (7).

4. Face avant technique selon l'une quelconque des revendications 1 à 3, **caractérisée en ce que** le châssis rigide (1,31) du module de refroidissement est assujetti aux pièces d'extrémités (7) par des moyens assurant son positionnement longitudinal et vertical sur le véhicule.

5. Face avant technique selon l'une quelconque des revendications 1 à 4, **caractérisée en ce que** le module de refroidissement est positionné en X et en Z (c'est-à-dire horizontalement suivant l'axe longitudinal du véhicule et verticalement) dans sa partie supérieure et référencé en X dans sa partie inférieure.

6. Face avant technique selon l'une quelconque des revendications 1 à 4, **caractérisée en ce que** le module de refroidissement est référencé en X en partie supérieure et référencé en X et en Z en partie inférieure.

7. Face avant technique selon l'une quelconque des revendications 1 à 6, **caractérisée en ce que** les positionnements en X et en Z se font uniquement sur les pièces d'extrémités (7).

8. Face avant technique selon la revendication 3 et l'une quelconque des revendications 1 à 6, **caractérisée en ce que** le positionnement en partie supérieure se fait sur la traverse haute (14).

9. Face avant technique selon l'une quelconque des revendications 1 à 6 et 8, **caractérisée en ce que** le positionnement en partie inférieure est effectué par une poutre basse (18).

10. Face avant technique selon l'une quelconque des revendications 1 à 9 dans laquelle le châssis rigide du module de refroidissement est une buse.

11. Ensemble de deux pièces d'extrémités destinées à compléter le châssis rigide d'un module de refroidissement pour constituer une face avant technique selon l'une quelconque des revendications 1 à 10.
